**Europäisches Patentamt**

(19) **European Patent Office**

**Office européen des brevets**

(11) Numéro de publication: **0 025 001**
**B1**

(12) # FASCICULE DE BREVET EUROPEEN

(45) Date de publication du fascicule du brevet:
09.11.83

(51) Int. Cl.³: **C 22 B 9/02**, C 22 B 9/05,
C 22 B 21/06, B 01 D 39/20

(21) Numéro de dépôt: **80420100.2**

(22) Date de dépôt: **19.08.80**

(54) **Cartouche destinée à la filtration active et au traitement de métaux et alliages liquides.**

(30) Priorité: **24.08.79 FR 7921957**

(43) Date de publication de la demande:
**11.03.81 Bulletin 81/10**

(45) Mention de la délivrance du brevet:
**09.11.83 Bulletin 83/45**

(84) Etats contractants désignés:
**AT BE CH DE GB LI NL SE**

(56) Documents cités:
**EP - A - 0 007 884**
**EP - A - 0 014 165**
**FR - A - 2 057 060**
**FR - A - 2 375 328**
**FR - A - 2 375 329**
**GB - A - 1 148 344**
**US - A - 3 010 712**
**US - A - 3 305 351**
**US - A - 3 528 801**
**US - A - 3 907 962**

(73) Titulaire: **SERVIMETAL, 23 bis, rue Balzac, F-75008 Paris (FR)**

(72) Inventeur: **du Manoir de Juaye, Pierre, Route de Lyon, Vimines F-73160 Cognin-France (FR)**
Inventeur: **Guerit, Pierre, 8 boulevard du Théâtre, F-73003 Chambery (FR)**
Inventeur: **Poliet, Gilbert, Rue du Pré Joli, F-73490 La Ravoire (FR)**
Inventeur: **Hicter, Jean-Marie, Rue des Pervenches, Coublevie F-38500 Voiron (FR)**

(74) Mandataire: **Pascaud, Claude et al, PECHINEY UGINE KUHLMANN 28, rue de Bonnel, F-69433 Lyon Cedex 3 (FR)**

# Cartouche destinée a la filtration active et au traitement de métaux et alliages liquides

La présente invention concerne un procédé et un dispositif de traitement d'un métal ou alliage liquide par passage à travers une cartouche amovible obturée à au moins une de ses extrémités par une plaque poreuse, de préférence à base de flux fritté, dont au moins une partie est remplie de grains de flux solide, et qui peut, en outre, comporter un moyen d'injection de gaz (ou de vapeur). Elle s'applique particulièrement à la fonderie des métaux et alliages légers, et, en particulier, de l'aluminium et de ses alliages, du magnésium et de ses alliages et de quelques autres métaux dont les points de fusion peu élevés sont compatibles avec l'utilisation des flux usuels à base d'halogénures métalliques, tels que le plomb, l'étain ou le zinc.

On convient généralement de désigner par le mot »traitement« l'ensemble des opérations que subit un métal ou alliage liquide brut de fusion avant son utilisation en fonderie, en vue d'en éliminer les impuretés et, en particulier, les inclusions qui altéreraient les propriétés des produits coulés. Ces opérations peuvent être de nature purement physique, telle que la filtration, ou physico-chimique, telle que la mise en contact avec des flux.

Tant dans la fonderie de pièces que dans la coulée semi-continue de plaques, billettes ou lingots et dans la coulée continue, on a reconnu la nécessité, pour obtenir des pièces saines, exemptes de défauts, de filtrer le métal. Dans la pratique, on a combiné la filtration mécanique avec un »lavage« au moyen d'un flux constitué le plus souvent par un ou plusieurs halogénures de métaux alcalins et alcalino-terreux fondus qui facilite le »mouillage« des inclusions et leur rassemblement sous forme de crasses.

Les inclusions non mouillées par le métal et mouillées par les flux parvenant à une interface métal-flux liquide ainsi crée, sont piégées à cette interface et pénètrent dans le flux liquide. Elles sont extirpées du métal liquide au cours de ce »lavage«.

Pour une quantité de métal liquide à traiter et une quantité de flux donnée, le traitement effectué est d'autant plus efficace que la surface interfaciale métal liquide-flux liquide est plus développée (dispersion fine ou émulsion) et que le brassage des liquides est important du fait du renouvellement des liquides au voisinage de l'interface.

L'utilisation de grains de flux solide la purification de l'aluminium, et d'alliage à base d'aluminium, a déjà été décrite dans un article de SPASSI et KLIAGINA, Liteinoe Proizvostno, n°4, 1959, pages 30 à 32, et a fait l'objet des brevets anglais GB 1.148.344, au nom de FOSECO INTERNATIONAL Ltd, japonais n° JA 49—27 921/74, au nom de KOKISO, allemand DE 1.941.270 (équivalent à US 3. 907.962) au nom d'OGISO.

Dans l'article et les trois brevets précités, l'aluminium à purifier traverse un lit de grains obtenus par fusion d'un ou plusieurs halogénures de métaux alcalin et alcalino-terreux, suivi d'un concassage. Mais ce procédé présente un certain nombre d'inconvénients: il comporte des difficultés lors du démarrage, lors d'un changement de métal ou d'alliage traité, pour opérer en continu sur des quantités importantes de métal, de l'ordre de plusieurs tonnes à plusieurs dizaines de tonnes, ainsi que pour procéder à un dégazage simultané du métal traité. En outre il ne met pas à l'abri du phénomène de pyrohydrolyse, par lequel les halogénures alcalins et alcalino-terreux mis en contact à température élevée avec l'air plus ou moins humide, subissent une décomposition en oxychlorures ou en oxydes avec libération d'acide chlorhydrique.

De même, l'utilisation de blocs poreux à base de céramiques poreuses (brevets FR-A-2.375.329, 2.381.001) ou de carbure de silicium poreux (brevet DE-A-2.140.593) ne résoud pas parfaitement le problème de la filtration car, outre le risque de voir se détacher des blocs filtrants, de petites particules de céramique qui seront entraînées dans le courant de métal, le débit de ces filtres est généralement très insuffisant pour alimenter les installations de coulées qui sont placées en aval.

Dans FR-A-2.375.328, on décrit un lit filtrant en grains de NaCl de 5 à 50 mm, non agglomérés entre eux, et dans lequel on introduit un courant de chlore gazeux, dont le seul effet est l'élimination du sodium contenu dans l'aluminium provenant directement des cuves d'électrolyse.

A l'heure actuelle les exigences de la construction aéronautique, des bandes minces pour boîtages, des feuilles minces, des fils fins, obligent les producteurs de demi-produits en métaux et alliages légers, à améliorer sans cesse la qualité, d'autant plus que l'affinage des méthodes analytiques a montré que des inclusions microscopiques, tenues jusqu'alors pour négligeables, pouvaient altérer certaines caractéristiques mécaniques et augmenter les taux de rebuts.

La présente invention permet d'obtenir un niveau de propreté du métal nettement supérieur aux procédés connus.

Elle concerne un dispositif de purification physico-chimique d'un métal liquide, comportant une cartouche amovible obturée à au moins une de ses extrémités par une plaque poreuse à base de flux fritté et dont au moins une partie est remplie de grains de flux solide et qui peut, en outre, comporter un moyen d'injection de gaz ou de vapeur au sein des grains de flux solide. Ce dispositif permet, en outre, d'éviter la pyrohydrolyse des constituants du flux.

Dans tout ce qui suit, nous désignerons par les expressions:

**0 025 001**

— »métal à filtrer«:
  le métal ou alliage destiné à subir le traitement de filtration sur la cartouche selon l'invention,
— »composé minéral actif«:
  un sel minéral, un mélange ou une combinaison de sels minéraux jouant le rôle de flux en agissant par effet chimique et/ou physico-chimique sur les inclusions et impuretés diverses présentes dans les métaux à traiter et dont l'action aboutit finalement à éliminer les inclusions et impuretés du métal traité,
— »traitement« du métal ou de l'alliage:
  le processus de purification physico-chimique, objet du brevet.

L'invention étant caractérisée par la combinaison, dans une cartouche amovible, de plaques poreuses à base de flux fritté, et de grains de flux solide, nous décrirons successivement ces différents éléments.

Les figures 1 à 6 représentent différents modèles de cartouches amovibles, comportant au moins une plaque filtrante poreuse et des grains de flux solide.

Les figures 7, 8 et 9 représentent trois poches de filtration comportant, comme élément essentiel, une cartouche amovible.

### A — Les plaques poreuses

Les plaques poreuses sont obtenues par frittage d'éléments de flux. Dans la description des plaques poreuses frittées, nous conviendrons de désigner par:

— »frittage« le procédé permettant de former à partir des éléments de composé minéral actif,une structure poreuse mécaniquement stable à la température de filtration,
— »éléments« les éléments dont l'agglomération constitue la plaque filtrante, quelle que soit leur forme: grains de forme géométrique régulière, cristaux, grains à cassure irrégulière, grains de forme allongée et même grains aciculaires, bâtonnets ou fibres à section circulaire ou quelconque.

Les plaques poreuses de flux fritté font l'objet de notre demande EP-A-0 014 165

L'idée générale de la présente invention est de regrouper en une structure unique la filtration purement mécanique, qui permet de retenir les inclusions et autres éléments étrangers dont la dimension est supérieure à celle des canaux du filtre, et la purification physico-chimique sous l'action d'un composé minéral actif agissant comme flux qui permet de piéger les inclusions à l'interface fluxmétal liquide. On a découvert que cet effet de purification physico-chimique par un flux était, dans certaines conditions, aussi efficace avec un flux solide en grain qu'avec un flux liquide, comme on le pratiquait jusqu'à présent, ces conditions étant, en particulier, la réalisation d'une grande surface de contact entre les grains de flux solide et le métal liquide à traiter. On a également découvert qu'il était possible d'agglomérer, par frittage, des éléments de flux solide et de réaliser ainsi des masses poreuses présentant à la fois des formes et dimensions de canaux et de porosités ouvertes permettant la filtration mécanique, en particulier par piégeage des inclusions, grâce à la forme tourmentée des canaux formés entre les éléments et grâce à une surface de contact élevé avec le métal liquide permettant la purification physico-chimique.

Il est apparu que les flux se prêtant le mieux à l'agglomération et ayant, par ailleurs, un point de fusion plus élevé que la température à laquelle se présentent les métaux et alliages à purifier, étaient essentiellement les fluorures minéraux simplex ou complexes, et, en particulier, les fluorures alcalins, alcalino-terreux, de magnésium, d'aluminium et de manganèse. L'emploi de sels de sodium, théoriquement possible, est parfois exclu dans le cas du traitement d'aluminium et de la plupart des alliages à base d'aluminium, car il crée un risque d'introduction de sodium dans le métal filtré, et l'on sait que cet élément a une influence défavorable, en particulier sur les alliages Al—Mg et Al—Si hypersiliciés, même à de très faibles niveaux de concentration.

Parmi toutes les combinaisons possibles entre les fluorures qui viennent d'être cités, on peut mentionner les combinaisons binaires, ternaires ou même quaternaires dont les point de fusion sera choisi de préférence au-dessus de 800°C.

C'est le cas, par exemple, des compositions suivantes, données en pourcentages pondéraux, à titre d'exemples non limitatifs:

$CaF_2$ (45,0%) — $MgF_2$ (55,0%) — P.F. 980°C
$AlF_3$ ( 8,5%) — KF (91,5%) — P.F. 820°C
$AlF_3$ (41,0%) — $CaF_2$ (59,0%) — P.F. 840°C
$BaF_2$ (85,0%) — $MgF_2$ (15,0%) — P.F. 910°C
$BaF_2$ (30,0%) — $CaF_2$ (70,0%) — P.F. 1050°C
$CaF_2$ (49,0%) — $MgF_2$ (49,0%) — P.F. 950°C
$LiF_2$ ( 2,0%)

3

La nature et la forme des éléments constituant le bloc de filtration peuvent également varier dans des limites assez larges.

Ces éléments peuvent être homogènes, c'est-à-dire constitués en totalité par le composé minéral actif, ou hétérogènes c'est-à-dire constitués par un substrat inerte recouvert de composé minéral actif, ou un substrat inerte poreux imprégné de composé minéral actif. Le bloc de filtration, dans son ensemble, peut être constitué d'éléments de même nature (homogènes ou hétérogènes) ou d'un mélange d'éléments de nature différente.

Le substrat inerte peut être choisi parmi les composés minéraux ne réagissant pas avec les métaux à traiter. C'est le cas, en particulier, de l'alumine électrofondue (corindon), des composés alumine-zircone électrofondus (corindons à la zircone) et de différents produits céramiques silico-alumineux et du carbure de silicium. Des substances carbonées telles que le graphite ou certains cokes sont également utilisables. D'autres composés tels que les nitrures ou oxynitrures de bore ou de silicium pourraient convenir, mais leur prix élevé les rend peu attractifs.

La forme et la grosseur des éléments est également un facteur important: la forme des éléments détermine la surface active du bloc de filtration et la forme des canaux. Cette surface, qui est minimale dans le cas de grains sphériques, est augmentée par emploi de grains tubulaires ou aciculaires ou de grains obtenus par concassage de billes ou autres formes géométriques simples. L'utilisation d'éléments en forme de bâtonnets ou de fibres allongées, dont le rapport longueur sur dimension transversale moyenne, peut se situer entre 5 et 200, par exemple, permet d'obtenir des blocs de filtration ayant une structure de feutre, très efficace en raison de la grande surface active, de la forme particulièrement tourmentée des canaux et de la porosité élevée propre à ce type d'enchevêtrement.

Des éléments poreux à structure hétérogène peuvent être obtenus, de façon connue, par frittage d'un composé stable — l'alumine par exemple — avec un composé sublimable ou décomposable à chaud qui s'élimine lors du frittage, puis par imprégnation avec le composé minéral actif fondu.

De même, des éléments poreux à structure homogène peuvent être obtenus en mélangeant le composé minéral actif avec un produit éliminable à chaud, par volatilisation ou par pyrolyse lors du frittage. La grosseur des éléments et leur répartition granulométrique est un des facteurs déterminant la porosité et la perméabilité du filtre, c'est-à-dire en pratique, sa capacité horaire de filtration. On a constaté, par exemple, qu'une plaque de filtration selon l'invention, constituée d'éléments en grains de 4 à 8 mm, sous une épaisseur de 40 mm, avait une capacité de filtration d'aluminium liquide à environ 750°C de l'ordre de 12 kg par centimètre carré de surface et par heure, avec une perte de charge de 10 à 20 mm d'aluminium liquide. La porosité d'un tel filtre est d'environ 40%.

Il est possible d'utiliser des éléments de dimensions beaucoup plus faibles descendant jusqu'à quelques dizaines de micromètres, à condition que le procédé de frittage permette d'obtenir une perméabilité suffisante pour assurer les débits de filtration élevés exigés par les processus industriels.

A partir d'éléments ayant la forme de bâtonnets de 1 mm de diamètre et de 15 mm de long, on obtient, après frittage, une structure feutrée dont la porosité atteint 80 à 90% et la capacité de filtration d'aluminium liquide à 750°C, est d'environ 25 kg par centimètre carré de surface et par heure, sous une épaisseur de 50 mm.

Les plaques de filtration étant constituées par frittage d'éléments, on peut leur conférer toutes les formes et dimensions exigées par les différents usages auxquels on les destine: plaques de formes géométriques simples, ou relativement complexes, cylindres, tubes, creusets, bouchons, busettes, que l'on peut disposer au-dessus d'une poche, dans un chenal de coulée, à l'entrée d'un moule. Dans ce dernier cas, on peut assurer le traitement ultime du métal au tout dernier instant avant sa mise en forme, à un endroit où toutes les causes de pollution et de soillures externes ont disparu et garantir ainsi une qualité de pièces coulées ou moulées inaccessibles jusqu'alors.

Le procédé de fabrication des plaques de filtration peut être mise en œuvre selon plusieurs variante, selon la nature des grains élémentaires.

Un premier mode de mise en oeuvre consiste à fondre le composé minéral actif, à le couler en plaque mince de quelques millimètre d'épaisseur, à le concasser et à calibrer les éléments, par tamisage, à la granulométrie désirée.

On met ensuite les éléments en place dans un moule et on chauffe, en atmosphère sèche, à une température légèrement inférieure à la température de fusion du composé minéral actif de façon à provoquer le frittage.

Le frittage est effectué sans pression. Il est également possible d'exercer une pression modérée pendant le frittage, en réduisant corrélativement la température et/ou la durée de l'opération. De façon générale, l'agglomération par frittage est effectuée en atmosphère sèche, en évitant tout contact avec une flamme, à une température inférieure de 5 à 150°C environ au point de fusion du composé minéral, pendant une durée qui peut se situer entre 5 minutes et 1 à 2 heures. La structure poreuse ainsi obtenue est mécaniquement très stable et résistante.

Une variante du procédé de fabrication consiste à comprimer ou pastiller le mélange de composés minéraux, puis à concasser les comprimés ou pastilles pour obtenir les éléments que l'on calibre par tamisage et agglomère par frittage comme on vient de le décrire.

L'obtention d'éléments en forme de bâtonnets ou de fibres allongées peut s'effectuer par différents procédés connus. On peur citer, à titre d'exemple, la coulée par gravité du composé minéral actif

# 0 025 001

fondu au travers d'une filière en graphite comportant une pluralité d'orifices calibrés au diamètre désiré, suivie d'un refroidissement rapide, ou encore le filage, au travers d'une filière, d'une pâte constituée, à partir du composé minéral actif en poudre ou en fins cristaux et d'un liant éliminable à chaud par évaporation ou pyrolyse, lors de l'agglomération. Dans ce dernier cas, on obtient des fibres ou bâtonnets à structure poreuse.

Dans le cas où l'on utilise des éléments hétérogènes, plusieurs variantes sont envisageables selon que ces éléments sont, ou non poreux. La méthode générale consiste à revêtir ou à imprégner les éléments avec du composé minéral actif, par exemple par immersion dans ledit composé à l'état fondu, puis à procéder après refroidissement, à un nouveau concassage, suivi d'un calibrage par tamisage, d'une mise en forme et d'un frittage.

Dans le cas où l'on part d'un composé minéral actif en grains de très petites dimensions, de quelques dizaines de micromètres à un ou deux millimètres, il est possible, pour obtenir une structure à porosité suffisante, de procéder selon des procédés connus à un mélange préalable avec un liant qui s'éliminera lors du frittage, par exemple un composé organique sublimable tel que du camphere, de la naphtaline, de l'hexachloréthane, ou pyrolysable, tel que du polyéthylène, du polyuréthane.

En variante, on peut également, de façon connue, partir d'un élément spongieux en une substance organique éliminable ou destructible à chaud, par exemple en mousse de polyuréthane expansé, l'imprégner par immersion dans une barbotine composée du composé minéral actif et d'un solvant ou d'un dispersant aqueux ou non aqueux, et procéder à une cuisson qui provoque à la fois la destruction de la mousse de polyuréthane et le frittage du composé minéral actif. Ce dernier procédé appliqué pour former des structures céramiques poreuses, a été décrit, en particulier, dans les brevets US 3.090.094 et 3.097.930.

## B — les grains de flux solide

Ils sont constitués par au moins un halogènure, simple ou complexe, d'un métal appartenant au groupe comprenant le sodium, le potassium, le lithium, le calcium, le baryum, le magnésium, l'aluminium, le manganèse.

Les grains de flux solide utilisés pour le remplissage partiel ou total de la cartouche, peuvent avoir des formes très diverses: par exemple, des sphères obtenues par les techniques classiques, telles que le bouletage, avec des diamètres pouvant aller de 2 à 15 mm environ, ou des granulés de forme et dimensions variées obtenus par tous moyens d'agglomération connus.

On peut, en particulier, obtenir des formes irrégulières, anguleuses, par concassage de granulés sphériques. Ces granulés peuvent être massifs, ou poreux. Dans ce dernier cas, on peut, par exemple, introduire lors de leur mise en forme un additif qui sera ensuite éliminé par évaporation ou dissolution sélective. Des formes très diverses peuvent être obtenues par pastillage, extrusion d'une pâte, compactage, par exemple dans une presse à boulets. Il est également possible qu'une partie du granulé solide soit constituée par une matière inerte, vis-à-vis du métal à traiter et des constituants du flux: par exemple, de l'alimine du carbure de silicium, de l'oxynitrure de silicium, du carbone ou différents réfractaires alumineux, silico-alumineux, ou autres matériaux stables vis-à-vis du métal liquide. Ces granulés inertes jouent alors uniquement le rôle de dispersants du métal liquide, de façon à multiplier les surfaces de contact entre métal liquide et flux solide.

De même, un granulé solide peut être constitué par un noyau inerte enrobé de flix solide actif, toutes les dispositions qui viennent d'être décrites, de façon non limitative, ayant pour but d'offrir une surface de contact aussi grande que possible avec le métal à traiter.

En résumé, il est possible d'utiliser quatre types de grains:

— des grains actifs, homogènes et utilisés seuls,
— des grains activés par imprégnation de flux, utilisés seuls,
— des grains mixtes, c'est-à-dire des grains dont la composition peut comporter des éléments actifs et des éléments inertes,
— des grains inertes, toujours utilisés en mélange avec des grains actifs.

Les composition qui suivent ont donné entière satisfaction, tant au point de vue activité qu'au point de vue durée de vie. Elles sont données à titre d'exemple non limitatif, en pourcentage pondéral:

5

Tableau I

|  | 1 | 2 | 3 | 4 | 5 | 6 | 7 | 8 | 9 |
|---|---|---|---|---|---|---|---|---|---|
| $AlF_3$ | 45 | 45 |  | 41 |  | 45 |  | 45 | 45 |
| $CaF_2$ | 55 |  | 50 | 59 | 49 | 53 | 45 |  | 53 |
| $MgF_2$ |  | 55 | 50 |  | 49 |  | 45 | 54 |  |
| LiF |  |  |  |  | 2 |  | 10 |  |  |
| LiCl |  |  |  |  |  | 2 |  |  |  |
| $MnCl_2$ |  |  |  |  |  |  |  | 1 |  |
| $MgCl_2$ |  |  |  |  |  |  |  |  | 2 |

## C—La cartouche amovible

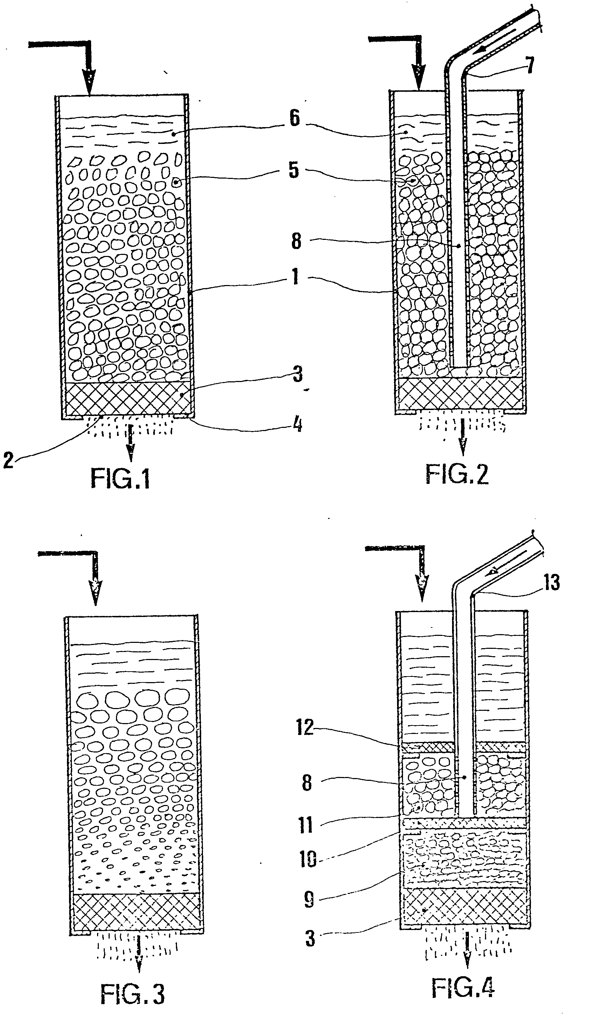

La figure 1 représente le mode de mise en oeuvre le plus simple. La cartouche (1) est obturée à sa partie inférieure (2) par le bloc de filtration (3) qui vient en appui sur le rebord (4). Le bloc de filtration a été obtenu par fusion à environ 1000°C d'un mélange binaire comportant 50% en poids de $MgF_2$ et 50% en poids de $CaF_2$. Le liquide a été coulé sous forme d'une plaque de 5 mm d'épaisseur. La plaque, refroidie, a été concassée et les grains concassés ont été calibrés, par tamisage, entre 4 et 8 mm. On a ajouté aux grains calibrés 2% en poids de LiF que l'on a intimement mélangé par brassage prolongé. Le mélange a été mis en place dans un moule ayant la forme d'un disque de 200 mm de diamètre et de 40 mm d'épaisseur, vibré et tassé, puis fritté par maintien à 950°C pendant 20 minutes.

Après refroidissement, on a obtenu un disque présentant une porosité d'environ 40% ayant une capacité de filtration de 3,6 tonnes par heure d'aluminium liquide à environ 750°C, avec une perte de charge d'environ 15 mm d'aliminium liquide. Après mise en place du disque, on remplit la cartouche sur les 3/4 des sa hauteur, soit 50 cm, de grains de flux (5), ayant la composition pondérale:

    $CaF_2$:   49%
    $MgF_2$:   49%
    LiF:       2%

obtenus par fusion des composants, concassage du bloc refroidi et calibrage entre 2 et 8 mm.

L'aluminium liquide (6) est introduit à la partie supérieure et s'écoule à la partie inférieure. La cartouche aura été préalablement chauffée en évitant toute pyrohydrolyse.

Sur la figure 2, on retrouve la même disposition que sur la figure 1, avec en outre, un tube (7) d'injection de gaz au sein du lit de grains de flux solide. Le tube peut être constitué en un matériau poreux, dans la partie (8) située au niveau des grains, ou être muni de perforations sur tout ou partie de sa hauteur.

On peut, de cette façon, injecter un gaz inerte (argon), un gaz actif (chlore), des mélanges de l'un de l'autre en proportions variées, ou encore des vapeurs de dérivés halogénés tel que l'hexachloréthane entraînées par un courant de gaz porteur, tel que l'azote. Ce traitement est particulièrement bien adapté aux coulées continues à débit faible ou modéré.

Sur la figure 3, le lit de grains de flux a été constitué à granulométrie progressivement croissante de l'aval vers l'amont, de façon telle qu'un colmatage éventuel du lit filtrant se produirait assez régulièrement dans toute la masse et pas seulement à la partie supérieure, comme cela pourrait être le cas dans la disposition de la figure 1.

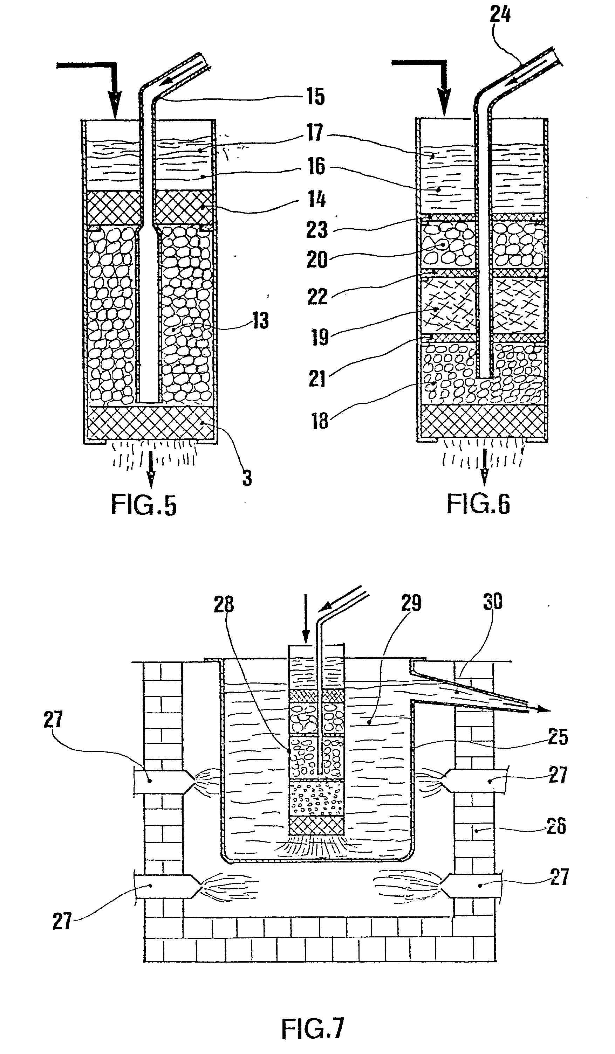

La figure 4 concerne une disposition un peu plus complexe, dans laquelle une première couche de grains de flux solide (9) est disposée entre la plaque filtrante (3) et une cloison frittée filtrante (10) ayant la même structure que la plaque (3), mais une épaisseur plus faible, et une deuxième couche (11) de grains de flux solide disposés entre la cloison (10) et une cloison (12) identique à la cloison (10). Un tube d'injection de gaz (13) est disposé dans la deuxième couche (11) de grains.

Les deux couches (9) et (11) de grains peuvent être identiques, mais elles peuvent aussi, et, de préférence, différer par au moins une de leurs caractéristiques physiques ou chimiques, telles que granulométrie, composition chimique, point de fusion, capacité de rétention d'une impureté particulière, etc.

La figure 5 représente une autre disposition dans laquelle le lit de grains (14) est immobilisé entre le bloc filtrant inférieur (3) et un bloc filtrant supérieur (14). Une telle disposition autorise une circulation du métal à filtrer de bas en haut ou de haut en bas sans risque d'entraînement de grains de flux solide.

Un tube (15) injecteur de gaz peut également être prévu.

La couche de métal à filtrer (16) peut être recouverte d'une couche de flux liquide (17) pour la soustraire à l'action de l'air.

La figure 6 représente un mode de réalisation comparable à celui de la figure 4, avec trois couches (18) (19) et (20) de grains solides, séparées par les cloisons (21) (22) (23). Chaque couche peut avoir un effet différent: l'une peut être destinée à éliminer le phosphore (granulés de NaF), l'autre, le sodium (granulés de coke), et l'autre peut être un flux classique, solide, à la température de filtration. Une injection de gaz peut être effectuée dans une seule ou plusieurs des couches (18) (19) et (20).

La figure 7 représente l'ensemble d'un système de filtration comportant une poche (25) placée dans le four (26) de maintien en température, éventuellement chauffé par un moyen quelconque tel que les brûleurs (27).

La cartouche filtrante amovible (28), qui a une structure analogue à celle de la figure 6, est alimentée en métal à purifier par sa partie supérieure. Le métal purifié (29) s'écoule à la partie inférieure et s'accumule dans la poche (25) et s'écoule par la goulotte (30) vers l'appareil utilisateur (métier de coulée).

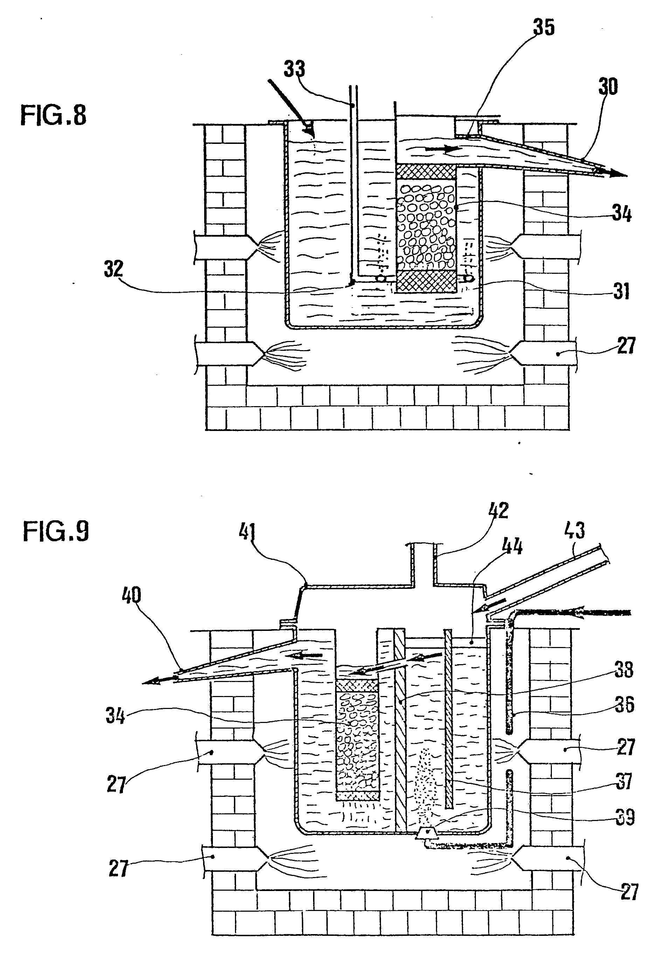

La figure 8 représente une poche de filtration (31) analogue à celle de la figure 7, mais dans laquelle l'injection de gaz est effectuée dans le métal (32) au moyen de l'injecteur (33) dont la partie inférieure est munie de perforations multiples, avant que le métal ne traverse la cartouche de filtration (34), qu'il traverse du bas vers le haut et d'où il s'écoule ensuite par la goulotte (35). Bien entendu, l'injection de gaz ou de vapeur pourrait être effectuée de façon connue, au moyen d'un bouchon poreux disposé au fond de la poche. Dans l'un et l'autre cas, l'injection doit être effectuée de façon telle que les bulles se dégagent à la périphérie de la cartouche et non au-dessous, car elles pourraient provoquer un décolmatage du filtre et des inclusions pourraient être entraînées dans le métal après traitement.

La figure 9 représente une variante d'exécution, dans laquelle le dégazage par gaz de traitement est effectué dans un compartiment intermédiaire séparé du compartiment d'entrée par la cloison (37), d'où le métal s'écoule par débordement et pénètre à la partie supérieure de la cartouche filtrante (34) placée dans un troisième compartiment séparé du précédent par la cloison (38). Le métal traité est recueilli à la sortie de la goulotte (40). Le gaz inerte peut être injecté, par exemple, au moyen du bouchon poreux (39) raccordé à la conduite de gaz (36). La poche peut être munie d'un couvercle (41) permettant à la fois de réduire les pertes thermiques et l'action de l'air. Un conduit (42) permet de récupérer les fumées éventuelles émises par la poche de traitement, de façon à façon à éviter toute pollution de l'environnement. L'alimentation en métal à traiter peut se faire par un conduit tel que (43) au travers du couvercle.

On peut, en outre, prévoir une ouverture de flux (44) dans le premier et, éventuellement dans le deuxième compartiment.

La disposition décrite sur les figures 7, 8 et 9, permet également de procéder à un traitement en continu en disposant deux cartouches filtrantes dans la poche, l'une en activité, l'autre en réserve, et à dériver le courant de métal à purifier dans la seconde après une durée prédéterminée, qui correspond au début de l'épuisement de la première, établie expérimentalement. Ces dispositions sont données à titre d'exemples non limitatifs. En particulier, le rapport des diamètres de la cartouche et de la poche n'est pas obligatoirement conforme à celui des dessins: la cartouche pourrait même occuper — ou constituer — la totalité du compartiment dans lequel elle est placée.

Exemples de mise en oeuvre de l'invention

Différents essais de mise en oeuvre ont été effectués avec des cartouches filtrantesayant des diamètres compris entre 100 et 500 millimètres, et de longueurs comprises entre 300 et 1000 millimètres.

Une cartouche filtrante du type représenté sur la figure 1, garnie avec des grains de flux solide correspondant à la composition n°2 du tableau I, et d'une granulométrie de 2 à 8 mm, et fermée par une plaque de flux fritté de 40 mm d'épaisseur, a une capacité de filtration d'environ 10 kg d'aluminium liquide à 750°C par heure et par centimètre carré de surface.

Une cartouche de 210 mm de diamètre et 700 mm de haut, aura ainsi une capacité de filtration d'environ 3,5 tonnes d'aluminium à l'heure. Si la cartouche est munie d'une canne d'injection de gaz, on pourra injecter pendant le traitement, environ 0,5 m$^3$ à l'heure d'un mélange azote-chlore à 5% de chlore, ou encore une centaine de grammes, par tonne d'aluminium, d'un composé halogène minéral ou organique, tel que l'hexachloréthane vaporisé et entraîné par un courant d'azote. La durée de vie d'une cartouche donnée est limitée par l'apparition du colmatage qui réduit sensiblement à la fois le débit et l'efficacité du traitement. Ce colmatage apparaît plus ou moins rapidement selon le métal traité.

A titre d'exemple, on a filtré dans une poche munie d'une cartouche de 210 mm de diamètre et de 700 mm de haut, de l'aluminium non allié pour conducteurs électriques du type A5/L (teneur en Al ⩾ 99,5%) ou 1050 A selon la norme »Aluminium Association«.

Le métal étant à une température égale ou légèrement supérieure à 720°C, et le débit réglé à 2

7

tonnes/heure, la perte de charge était de 15 mm au démarrage, de 25 mm après 8 heures (16 tonnes de métal traité), et de 75 mm après 15 heures (30 tonnes de métal traité). Sur le même type de cartouche, on a filtré du métal type 1235 (norme Aluminium Association) destiné à la fabrication de feuille mince (0,05 à 0,1 mm). On a pu traiter 100 tonnes de ce métal avant que la cartouche ne manifeste des risques d'épuisement.

L'efficacité du traitement a été testée par les méthodes habituelles telles que:

— comptage d'inclusion au microscope optique,
— dosage d'oxygène par les méthodes d'activation neutronique permettant de descendre jusqu'à 0,2 ppm,
— mesure des charges de rupture sur des éprouvettes prélevées dans le sens travers-court sur des planches laminées, obtenues avec du métal traité et non traité,
— mesure du nombre de casses lors du tréfilage, jusqu'à 0,5 mm, de fil machine obtenu avec du métal traité et non traité: la longueur moyenne entre deux casses dues à des inclusions est passée de 600 km à plus de 1300 km.

La mise en oeuvre de l'invention présente de nombreux avantages par rapport aux procédés antérieurs de traitement par des flux liquides ou de simples grains de flux solide.

L'obturation de l'extrémité aval de la cartouche par une plaque poreuse assure le maintien en place du lit de grains solides et empêche tout entraînement de particules de flux solide dans le courant de métal traité.

Lorsque l'extrémité amont de la cartouche comporte également une plaque poreuse, elle assure une très bonne dispersion du courant du métal liquide à traiter dans tout le volume de la cartouche et évite la formation de trajets privilégiés laissant de côté d'importantes zones mortes (phénomène appelé »renardage«) et, en outre, on peut alimenter la cartouche en métal à purifier indifféremment en source ou en écoulement continu.

Les plaques poreuses qui sont compatibles avec une injection de gaz inerte et/ou actif, permettent également d'assurer un cloisonnement entre des couches de grains de flux ayant des compositions ou des structures — donc des fonctions — différentes.

Lorsque ces plaques poreuses sont constituées d'éléments de flux fritté, elles participent, en outre, à la purification physico-chimique du métal et, du fait de la forme particulièrement tourmentée des canaux entre les éléments frittés, elles ont une efficacité très élevée, et complètent et renforcent dans une proportion importante l'action des grains de flux solide.

On peut, en outre, conférer aux grains de flux solide, d'une part, et aux plaques de flux fritté, d'autre part, des caractéristiques bien précises et différenciées (porosité, granulométrie, composition chimique, réactivité particulière sur une impureté ou un composant donné du métal ou de l'alliage traité), de façon telle que l'association grains de flux solide + bloc de flux fritté conduit à des niveaux de purification inaccessibles avec les méthodes connues jusqu'à présent.

Leur mise en oeuvre sous forme de cartouche compacte amovible, peut s'effectuer dans des poches de structure simple, de dimensions réduites, compatibles avec les équipements existants de coulée continue ou discontinue.

L'invention s'applique à la plupart des procédés de mise en forme d'aluminium, de magnésium et d'alliages à base d'aluminium ou de magnésium à partir du métal liquide, tels que coulée continue d'ébauches sur jante de roue refroidie, type Properzi, coulée semi-continue de plaques et billettes, coulée continue entre cylindres refroidis, type Hazelett, Hunter ou 3C, coulée de pièces en moule, en sable, dans le système dit »sous basse pression«. Dans ce dernier cas, le tube d'amenée du métal liquide dans le moule est rempli de grains de flux solide immobilisés entre deux plaques poreuses en flux fritté, ce qui permet d'obtenir des pièces parfaitement saines sans aucune porosité.

Dans tous les cas, la mise en oeuvre de l'invention, telle qu'elle vient d'être décrite, permet de réduire très sensiblement la teneur en inclusions et elle entraîne une diminution importante des taux de rebuts sur tous les produits obtenus à partir de métaux et alliages ainsi traités.

**Revendications**

1. Dispositif destiné à la purification physico-chimique d'un courant liquide d'aluminium, de magnésium, de zinc, de plomb, d'étain ou d'alliages à base de l'un de ces métaux, comportant une cartouche amovible munie d'une ouverture amont par laquelle entre le métal à purifier et d'une ouverture aval par laquelle sort le métal purifié, la cartouche étant remplie au moins partiellement de grains de flux solide dont le point de fusion est supérieur à la température du courant de métal liquide, la partie externe au moins de ces grains étant constituée par un/ou des fluorures simples ou complexes de sodium, lithium, potassium, calcium, baryum, magnésium, aluminium ou manganèse, caractérisé en ce que l'ouverture aval (2) est obturée par une plaque poreuse (3) obtenue par frittage d'éléments individuels dont le point de fusion est supérieur à la température du courant de métal liquide, la partie extérieure au moins de ces éléments avant frittage étant constituée par un ou des fluorures simples ou complexes de sodium, lithium, potassium, calcium, baryum, magnésium, aluminium ou manganèse.

2. Dispositif selon revendication 1, caractérisé en ce que la cartouche (1) comporte, en outre, un moyen tubulaire (7) d'injection de gaz au sein des grains de flux solide, disposé sensiblement selon son axe longitudinal.

3. Dispositif selon revendication 2, caractérisé en ce que le moyen tubulaire (7) est perméable aux gaz ou vapeurs d'halogènures minéraux ou organiques sur au moins une partie de la longueur qui est en contact avec les grains.

4. Dispositif selon l'une quelconque des revendications 1 à 3, caractérisé en ce que l'ouverture amont de la cartouche est également obturée par une plaque poreuse (14) obtenue de façon identique à la plaque poreuse aval (3).

5. Dispositif selon l'une quelconque des revendications 1 à 4, caractérisé en ce que la cartouche comporte différentes couches (9) (11) de grains de flux différant entre elles par au moins une caractéristique physique et/ou chimique, telles que composition, réactivité vis-à-vis des impuretés du métal à traiter, point de fusion, granulométrie.

6. Dispositif selon revendication 5, caractérisé en ce que les différentes couches (9) (11) de grains de flux sont séparées par des plaques poreuses (10) (21) (22) obtenues de façon identique aux plaques poreuses amont (14) et aval (3).

**Patentansprüche**

1. Vorrichtung zum physikalisch-chemischen Reinigen eines Stroms aus Aluminium, Ammoniak, Zink, Blei, Zinn oder Legierungen auf der Basis eines dieser Metalle, mit einer abnehmbaren Hülse einschließlich einer stromauf gelegenen Öffnung, durch die das zu reinigende Metall eintritt, und einer stromab gelegenen Öffnung, durch die das gereinigte Metall austritt, wobei die Hülse wenigstens teilweise mit Körnern aus massivem Zuschlag gefüllt ist, dessen Schmelzpunkt höher als die Temperatur des Stroms aus flüssigem Metall ist, wobei wenigstens der äußere Teil dieser Körner aus einem oder mehreren einfachen oder komplexen Fluoriden des Natriums, Lithiums, Kaliums, Calciums, Bariums, Magnesiums, Aluminiums oder Mangans besteht, dadurch gekennzeichnet, daß die stromab gelegene Öffnung (2) durch eine poröse Platte (3) verschlossen ist, die durch Sintern von einzelnen Elementen herbestellt ist, deren Schmelzpunkt höher als die Temperatur des Stroms des flüssigen Metalls ist, wobei wenigstens der äußere Teil dieser Elemente vor dem Sintern aus einem oder mehreren einfachen oder komplexen Fluoriden des Natriums, Lithium, Kalium, Calciums, Bariums, Magnesiums, Aluminiums oder Mangans besteht.

2. Vorrichtung nach Anspruch 1, dadurch gekennzeichnet, daß die Hülse (1) außerdem eine rohrförmige Einrichtung (7) zum Einspritzen von Gas in die Körner aus massivem Zuschlag aufweist, die im wesentlichen längs ihrer Achse angeordnet ist.

3. Vorrichtung nach Anspruch 2, dadurch gekennzeichnet, daß die rohrförmige Einrichtung (7) auf wenigstens einem Teil ihrer in Berührung mit den Körnern stehenden Länge gegenüber den Gasen oder Dämpfen von Mineralien oder organischen Halogeniden durchlässig ist.

4. Vorrichtung nach einem der Ansprüche 1 bis 3, dadurch gekennzeichnet, daß die stromauf gelegene Öffnung der Hülse ebenfalls durch eine poröse Platte (14) verschlossen ist, die in identischer Weise wie die stromab gelegene poröse Platte (3) hergestellt ist.

5. Vorrichtung nach einem der Ansprüche 1 bis 4, dadurch gekennzeichnet, daß die Hülse verschiedene Schichten (9, 11) aus Zuschlagkörnern aufweist, die sich durch wenigstens eine charakteristische physikalische und/oder chemische Eigenschaft unterscheiden, zum Beispiel durch Zusammensetzung, Reaktionsfähigkeit gegenüber Verunreinigungen des zu behandelnden Metalls, Schmelzpunkt, Körnung.

6. Vorrichtung nach Anspruch 5, dadurch gekennzeichnet, daß die unterschiedlichen Schichten (9, 11) aus Zuschlagkörnern durch poröse Platten (10, 21, 22) getrennt sind, die in identischer Weise wie die stromauf (14) und stromab (3) gelegene Platten hergestellt sind.

**Claims**

1. Apparatus for the physical-chemical purification of a liquid flow of aluminium, magnesium, zinc lead, tin or alloys based on one of said metals, comprising a removable cartridge provided with an upstream aperture through which the metall to be purified enters and a downstream aperture through which the purified metal issues, the cartridge being at least partially filled with grains of solid flux, the melting point of which is higher than the temperature of the flow of liquid metal, the outer portion at least of said grains comprising one or more simple or complex fluorides of sodium, lithium, potassium, calcium, barium, magnesium, aluminium or manganese, characterised in that the downstream aperture (2) is closed by a porous plate (3) produced by sintering individual elements having a melting point which is higher than the temperature of the flow of liquid metal, the outer portion at least of said elements, before sintering, comprising one or more simple or complex fluorides of sodium, lithium, potassium, calcium, barium, magnesium, aluminium or manganese.

2. Apparatus according to claim 1 characterised in that the cartridge (1) further comprises a tube means (7) for injecting gas within the grains of solid flux, said tube means being disposed substantially along its longitudinal axis.

3. Apparatus according to claim 2 characterised in that the tube means (7) is permeable to the gases or vapours of organic or inorganic halides over at least a part of the length which is in contact with the grains.

4. Apparatus according to any one of claims 1 to 3 characterised in that the upstream aperture of the cartridge is also closed by a porous plate (14) produced in an identical fashion to the downstream porous plate (3).

5. Apparatus according to any one of claims 1 to 4 characterised in that the cartridge comprises different layers (9, 11) of grains of flux which differ from each other in at least one physical and/or chemical characteristic such as composition, reactivity relative to the impurities in the metal to be treated, melting point and granulometry.

6. Apparatus according to claim 5 characterised in that the different layers (9, 11) of grains of flux are separated by porous plates (10, 11) produced in an identical fashion to the upstream and downstream porous plates (14 and 3).

FIG.1

FIG.2

FIG.3

FIG.4

FIG.5

FIG.6

FIG.7

FIG.8

FIG.9